# EUROPÄISCHE PATENTSCHRIFT

(11) **EP 2 126 426 B1**
(45) Veröffentlichungstag und Bekanntmachung des Hinweises auf die Patenterteilung: **16.03.2011**
(21) Anmeldenummer: 08701506.1
(22) Anmeldetag: 15.01.2008
(51) Int. Cl.: F16K 11/085

(54) **KOMBINATIONSVENTIL**
COMBINATION VALVE
SOUPAPE COMBINÉE

(30) Priorität: 02.02.2007 DE 102007005363
(43) Veröffentlichungstag der Anmeldung: 02.12.2009
(73) Patentinhaber: Continental Automotive GmbH, 30165 Hannover (DE)
(72) Erfinder: WEIS, Christian, 55257 Budenheim (DE)
(86) Internationale Anmeldenummer: PCT/EP2008/050398
(87) Internationale Veröffentlichungsnummer: WO 2008/092739

(56) Entgegenhaltungen:
- EP-A- 0 048 680
- EP-A2- 1 335 158
- DE-A1- 3 420 474
- DE-C1- 4 318 203
- GB-A- 1 191 651

## Beschreibung

Die Erfindung bezieht sich auf ein Abgasrückführventil in Kraftfahrzeugen.

Solche Ventile für Abgase sind bekannt. In der EP 1 335 158 B1 wird ein Klappenventil für Brennstoffaggregate beschrieben. Dieses Klappenventil weist einen Gaseintritt und zwei Gasaustritte auf. Jeder Gasaustritt kann mit einer Ventilklappe verschlossen werden, wobei beide Ventilklappen senkrecht zueinander angeordnet sind. Dadurch ist es möglich, die Gesamtmenge an Gas entweder durch den einen Gasaustritt oder durch den anderen Gasaustritt zu leiten. In der Regel werden zwei Gasaustritte vorgesehen, um das Gas wahlweise hinter dem jeweiligen Gasaustritt zu kühlen oder ungekühlt weiterzuleiten. Das jeweilige Umschalten erfolgt dann über die Ventilklappen, die gemeinsam an einer Welle drehbar gelagert sind. Bei solchen Klappenventilen ist nachteilig, dass nur zwei gasmengenunabhängige Einstellungen vorgenommen werden können. Entweder wird die gesamte Gasmenge hinter dem jeweiligen Gasaustritt gekühlt, oder die gesamte Gasmenge wird ungekühlt hinter dem jeweiligen Gasaustritt des Klappenventils weitergeleitet. Mit den Klappenventilen nach dem Stand der Technik ist eine zusätzliche Regelung der Gasmenge bei der jeweiligen Einstellung nicht möglich. Sofern die Gasmenge je nach Betriebszustand zusätzlich geregelt werden muss, ist es erforderlich, vor oder hinter den beiden Gasaustritten des Klappenventils jeweils weitere Absperrorgane vorzusehen, die dann eine Mengenregelung vornehmen können. Der hohe konstruktive Aufwand ist dabei sehr nachteilig.

Aus der DE 34 20 474 A1 ist ein Kombinationsventil mit zylindrischer Bohrung und Drehschieber bekannt, während die GB 1,191,651 ein Kombinationsventil für eine Heizungsanlage zeigt, das einen Teilstrom einer Heizflüssigkeit geregelt durch einen Radiator leitet.

Der Erfindung liegt daher die Aufgabe zugrunde, ein Abgasrückführventil zu schaffen, mit welchem es möglich ist, neben der Einstellung der Positionen "gekühlt" oder "nicht gekühlt" auch gleichzeitig eine Mengenregelung vorzunehmen. Das Abgasrückführventil soll dabei relativ platzsparend ausgestaltet sein.

Die der Erfindung zugrunde liegende Aufgabe wird durch ein Abgasrückführventil gelöst, das die Merkmale des Anspruches 1 aufweist.

Mit dem Drehschieber ist somit auch eine vollständige Sperrung möglich. Es hat sich in überraschender Weise gezeigt, dass durch die Anordnung und Wirkung des Drehschiebers nicht nur eine Führung des Abgases ungekühlt oder gekühlt durch den Kühler eingestellt werden kann, sondern es auch zusätzlich möglich ist, dabei die Menge des Gases einzustellen, die durch das Abgasrückführventil geleitet werden soll. Auf die Anordnung von mehreren Ventilklappen kann dabei in vorteilhafter Weise verzichtet werden, so dass die Anordnung des Kombinationsventils nur einen relativ geringen Bauraum erforderlich macht. Die Entscheidung, ob das Gas gekühlt oder ungekühlt im Prozess weitergeleitet wird, wird bei dem Kombinationsventil in vorteilhafter Weise mit einer kontinuierlichen Mengenregelung des Gases kombiniert, so dass zusätzliche Absperrorgane für eine Mengenregelung des Gases nicht vorgesehen werden müssen.

Eine bevorzugte Ausgestaltung der Erfindung besteht darin, dass der Gaseintritt E und der Gasaustritt A einerseits und die erste Abzweigung Z1 und die zweite Abzweigung Z2 andererseits jeweils zueinander senkrecht angeordnet sind, wobei die Längsachsen vom Gaseintritt E, Gasaustritt A, erster Abzweigung Z1 und zweiter Abzweigung Z2 einen gemeinsamen Schnittpunkt aufweisen. Dadurch kann das Kombinationsventil besonders kompakt gebaut werden, wobei gleichzeitig ein einfacher Drehschieber eingesetzt werden kann, dessen Herstellung konstruktiv relativ problemlos erfolgen kann.

Gemäß einer weiteren bevorzugten Ausgestaltung der Erfindung ist vorgesehen, dass als Kühler ein Wasserkühler angeordnet ist. Das dann zu kühlende Gas lässt sich besonders rasch und effektiv abkühlen, was sich besonders vorteilhaft auf die Verkleinerung des erforderlichen Bauraumes für das Kombinationsventil auswirkt.

In Kraftfahrzeugen steht für die Abgasrückführung in der Regel nur ein relativ geringer Bauraum zur Verfügung, so dass der Einsatz des Abgasrückführventils in Kraftfahrzeugen besonders vorteilhaft ist.

Der Gegenstand der Erfindung wird nachfolgend anhand der Zeichnung (Fig. 1 bis Fig. 6) näher und beispielhaft erläutert.
- Fig. 1: zeigt das Kombinationsventil teilweise im Querschnitt im gesperrten Zustand.
- Fig. 2: zeigt das Kombinationsventil teilweise im Querschnitt beim Durchtritt einer kleinen Menge an ungekühltem Abgas.
- Fig. 3: zeigt das Kombinationsventil teilweise im Querschnitt beim Durchtritt der vollständigen Menge an ungekühltem Abgas.
- Fig. 4: zeigt das Kombinationsventil teilweise im Querschnitt beim Durchtritt einer kleinen Menge an gekühltem Abgas.
- Fig. 5: zeigt das Kombinationsventil im Querschnitt beim Durchtritt der vollständigen Menge an gekühltem Abgas.
- Fig. 6: zeigt das Kombinationsventil in dreidimensionaler Darstellung mit Sicht auf den Drehschieber in der Position gemäß Fig. 5.

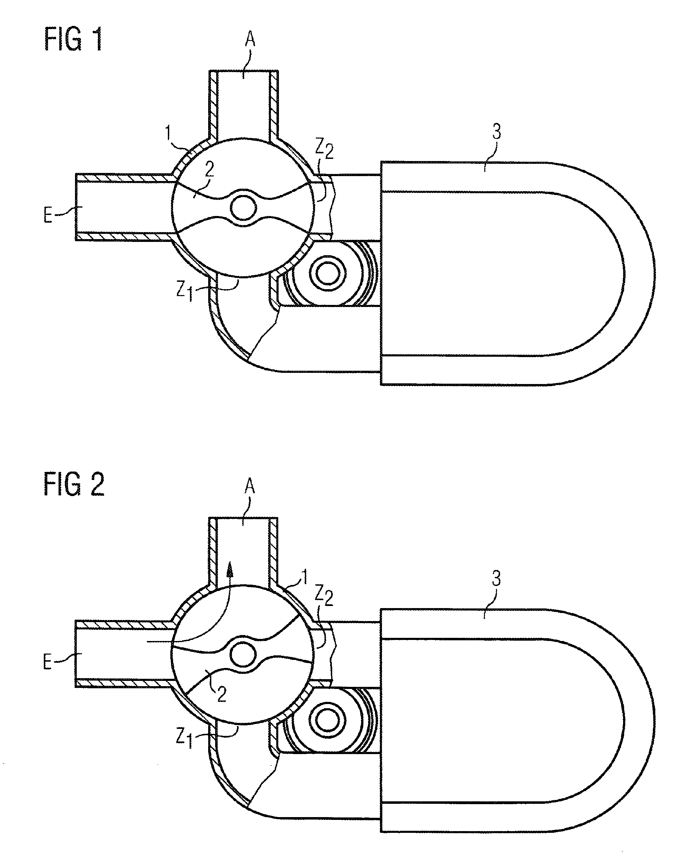

In Fig. 1 ist das Kombinationsventil teilweise im Querschnitt im gesperrten Zustand dargestellt. Bei dem Gas handelt es sich um Abgas eines Kraftfahrzeuges. Das Kombinationsventil besteht aus einem rohrförmigen Mittelteil 1, einem am Außenmantel des rohrförmigen Mittelteils 1 angeordneten Gaseintritt E, einem am Außenmantel des rohrförmigen Mittelteils 1 zum Gaseintritt E benachbart angeordneten Gasaustritt A, einer am Außenmantel des rohrförmigen Mittelteils 1 dem Gasaustritt A gegenüberliegend angeordneten ersten Abzweigung Z1 sowie einer am Außenmantel des rohrförmigen Mittelteils 1 dem Gaseintritt E gegenüberliegend angeordneten zweiten Abzweigung Z2. Die erste Abzweigung Z1 und die zweite Abzweigung Z2 sind über einen Kühler 3 miteinander verbunden, wobei in vorteilhafte Weise als Kühler 3 ein Wasserkühler eingesetzt wird. Das Kombinationsventil weist ferner einen Drehschieber 2 auf, der mittig im rohrförmigen Mittelteil 1 drehbar um die Längsachse des rohrförmigen Mittelteils 1 gelagert ist. Der Drehschieber 2 wird an seinen beiden äußeren Begrenzungen in Längsrichtung gesehen an der Innenwand des rohrförmigen Mittelteils 1 dichtend geführt. Der Drehschieber 2 kann je nach Betriebszustand den Gaseintritt E, den Gasaustritt A, die erste Abzweigung Z1 und die zweite Abzweigung Z2 für den Gasdurchgang mindestens teilweise sperren. Der Gaseintritt E und der Gasaustritt A einerseits und die erste Abzweigung Z1 und die zweite Abzweigung Z2 andererseits sind jeweils zueinander senkrecht angeordnet, wobei deren Längsachsen einen gemeinsamen Schnittpunkt aufweisen. Im in Fig. 1 dargestellten Zustand sperrt der Drehschieber 2 den Gaseintritt E, so dass kein Abgas durch das Kombinationsventil geleitet wird. Soll eine kleine Menge an Abgas ungekühlt durch das Kombinationsventil geleitet werden, so ist es erforderlich, den Drehschieber 2 geringfügig gegen den Uhrzeigersinn zu verdrehen (nicht dargestellt). Der Drehschieber 2 wird dabei so weit gegen den Uhrzeigersinn verdreht, bis die gewünschte Menge an Abgas durch das Kombinationsventil geleitet wird.

In Fig. 2 ist das Kombinationsventil teilweise im Querschnitt für denjenigen Fall dargestellt, dass eine relativ kleine Menge an Abgas ungekühlt in Pfeilrichtung durch das Kombinationsventil geleitet werden soll. Durch eine leichte Verdrehung des Drehschiebers 2 gegen den Uhrzeigersinn gibt dieser einen Teil des Gaseintritts E frei, so dass eine geringe Menge an Abgas durch das Kombinationsventil zum Gasaustritt A gelangen kann. Der Kühler 3 wird dabei nicht mit Abgas beaufschlagt.

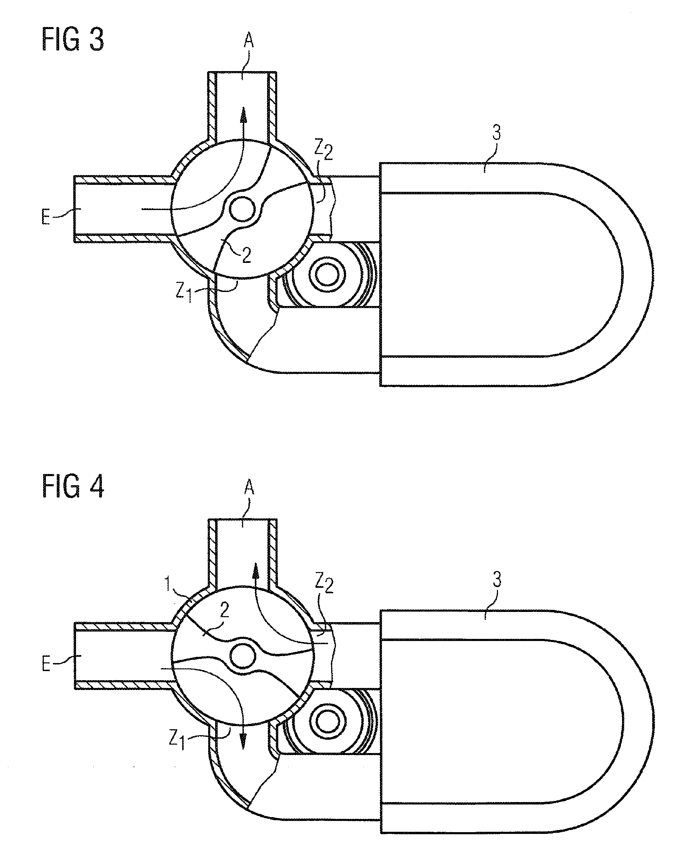

In Fig. 3 ist das Kombinationsventil teilweise im Querschnitt in der Position dargestellt, in der die gesamte Menge an Abgas durch das Kombinationsventil ungekühlt in Pfeilrichtung geleitet wird. Um diese Position ausgehend von dem in Fig. 2 dargestellten Zustand zu erreichen, ist es erforderlich, dass der Drehschieber 2 noch weiter gegen den Uhrzeigersinn verdreht wird.

In Fig. 4 ist das Kombinationsventil teilweise im Querschnitt für denjenigen Zustand dargestellt, dass ein Teil des Abgases gekühlt in Pfeilrichtung durch das Kombinationsventil geleitet wird. Ausgehend von dem in Fig. 1 dargestellten Zustand ist es dazu erforderlich, dass der Drehschieber 2 im Uhrzeigersinn etwas verdreht wird. Dadurch wird ein Teil des Gaseintritts E freigegeben und gleichzeitig ein Teil der zweiten Abzweigung Z2 freigelegt, so dass ein geringer Teil des Abgases über die erste Abzweigung Z1, über den Kühler 3 und über die zweite Abzweigung Z2 dem Gasaustritt A zugeleitet wird.

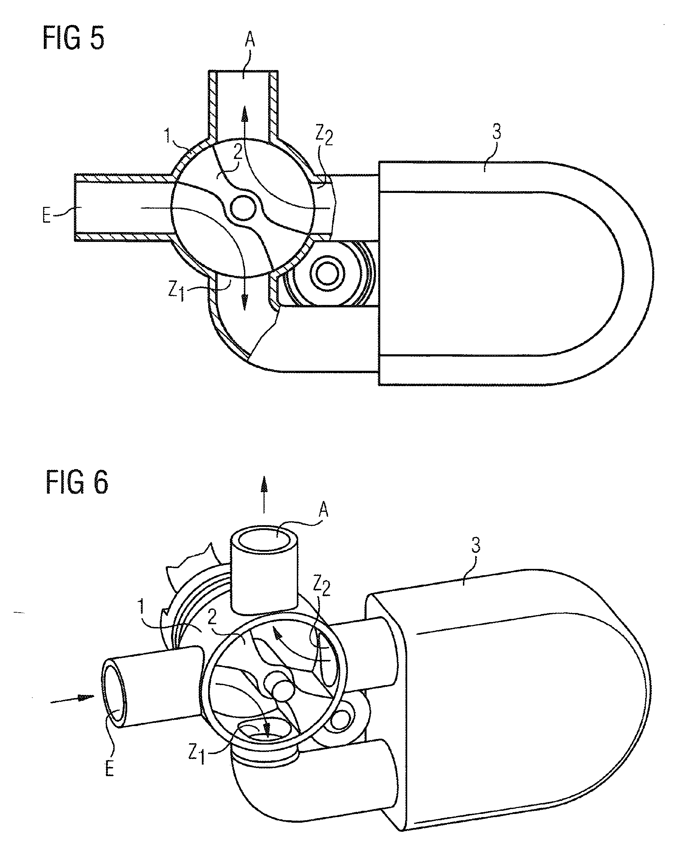

In Fig. 5 ist das Kombinationsventil teilweise im Querschnitt für denjenigen Zustand dargestellt, dass die gesamte Menge an Abgas gekühlt durch das Kombinationsventil geleitet wird. Um dies ausgehend von der in Fig. 4 dargestellten Position zu erreichen, ist es erforderlich, den Drehschieber 2 noch weiter im Uhrzeigersinn zu verdrehen.

In Fig. 6 ist das Kombinationsventil dreidimensional mit Blick auf den Drehschieber 2 in dem in Fig. 5 dargestellten Zustand dargestellt. Das Kombinationsventil benötigt generell lediglich einen geringen Bauraum und kombiniert die Möglichkeit einer Gaskühlung mit gleichzeitiger Mengenregelung des Gases in besonders vorteilhafter Weise, wobei es sich besonders als Abgasrückführventil in Kraftfahrzeugen eignet.

## Patentansprüche

1. Abgasrückführventil zur gekühlten oder ungekühlten Weiterleitung eines Gases, **dadurch gekennzeichnet, dass** es mit einem rohrförmigen Mittelteil (1), einem am Außenmantel des rohrförmigen Mittelteils (1) angeordneten Gaseintritt E, einem am Außenmantel des rohrförmigen Mittelteils (1) zum Gaseintritt E benachbart angeordneten Gasaustritt A, einer am Außenmantel des rohrförmigen Mittelteils (1) dem Gasaustritt A gegenüberliegend angeordneten ersten Abzweigung Z1 und einer am Außenmantel des rohrförmigen Mittelteils (1) dem Gaseintritt E gegenüberliegend angeordneten zweiten Abzweigung Z2 ausgebildet ist, wobei die erste Abzweigung Z1 mit der zweiten Abzweigung Z2 über einen Kühler (3) miteinander verbunden sind und ein Drehschieber (2) mittig im rohrförmigen Mittelteil (1) drehbar um die Längsachse des rohrförmigen Mittelteils (1) gelagert ist, der an seinen beiden äußeren Begrenzungen in Längsrichtung gesehen an der Innenwand des rohrförmigen Mittelteils (1) dichtend geführt werden kann und je nach Betriebszustand den Gaseintritt E vollständig sperrt oder den Abgasstrom kontinuierlich mengengeregelt von dem Gaseintritt. E ungekühlt zu dem Gasaustritt A oder gekühlt von dem Gaseintritt E über die erste Abzweigung Z1, den Kühler 3 und die zweite Abzweigung Z2 zu dem Gasaustritt A weiterleitet.

2. Abgasrückführventil nach Anspruch 1, bei dem der Gaseintritt E und der Gasaustritt A einerseits und die erste Abzweigung Z1 und die zweite Abzweigung Z2 andererseits jeweils zueinander senkrecht angeordnet sind, wobei die Längsachsen von Gaseintritt E, Gasaustritt A, erster Abzweigung Z1 und zweiter Abzweigung Z2 einen gemeinsamen Schnittpunkt aufweisen.

3. Abgasrückführventil nach Anspruch 1 oder Anspruch 2, bei dem als Kühler (3) ein Wasserkühler angeordnet ist.

## Claims

1. Exhaust-gas recirculation valve for forwarding a gas in a cooled or uncooled state, **characterized in that** it is configured with a tubular center part (1), a gas inlet E which is arranged on the outer shell of the tubular center part (1), a gas outlet A which is arranged on the outer shell of the tubular center part (1) adjacently to the gas inlet E, a first branch Z1 which is arranged on the outer shell of the tubular center part (1) such that it lies opposite the gas outlet A, and a second branch Z2 which is arranged on the outer shell of the tubular center part (1) such that it lies opposite the gas inlet E, the first branch Z1 and the second branch Z2 being connected to one another via a radiator (3), and a rotary slide (2) being mounted centrally in the tubular center part (1) such that it can be rotated about the longitudinal axis of the tubular center part (1), which rotary slide (2) can be guided sealingly, at its two outer boundaries as viewed in the longitudinal direction, on the inner wall of the tubular center part (1) and, depending on the operating state, completely shuts off the gas inlet E or forwards the exhaust-gas stream in a continuous quantity-regulated manner, uncooled from the gas inlet E to the gas outlet A or cooled from the gas inlet E via the first branch Z1, the radiator 3 and the second branch Z2 to the gas outlet A.

2. Exhaust-gas recirculation valve according to Claim 1, in which the gas inlet E and the gas outlet A firstly and the first branch Z1 and the second branch Z2 secondly are arranged in each case perpendicularly with respect to one another, the longitudinal axes of the gas inlet E, the gas outlet A, the first branch Z1 and the second branch Z2 having a common point of intersection.

3. Exhaust-gas recirculation valve according to Claim 1 or claim 2, in which a water radiator is arranged as radiator (3).

## Revendications

1. Valve de recyclage des gaz d'échappement permettant de transférer un gaz refroidi ou non refroidi, **caractérisée par le fait qu'**elle est réalisée avec une partie centrale tubulaire (1), une entrée des gaz E placée sur l'enveloppe extérieure de la partie centrale tubulaire (1), une sortie des gaz A placée à proximité de l'entrée des gaz E sur l'enveloppe extérieure de la partie centrale tubulaire (1), une première dérivation Z1 placée à l'opposé de la sortie des gaz A sur l'enveloppe extérieure de la partie centrale tubulaire (1) et une deuxième dérivation Z2 placée à l'opposé de l'entrée des gaz E sur l'enveloppe extérieure de la partie centrale tubulaire (1), où la première dérivation Z1 est reliée à la deuxième dérivation Z2 à travers un radiateur (3) et où une vanne rotative (2) est montée, au centre de la partie centrale tubulaire (1), en rotation autour de l'axe longitudinal de la partie centrale tubulaire (1), ladite vanne rotative pouvant être commandée tout en étant étanche contre la paroi intérieure de la partie centrale tubulaire (1) à ses deux extrémités vues dans le sens longitudinal et, en fonction de l'état de fonctionnement, ou bien fermant complètement l'entrée des gaz E ou bien réglant d'une façon continue la quantité de gaz d'échappement parvenant, soit sans être refroidi, de l'entrée des gaz E à la sortie des gaz A, soit refroidi, à partir de l'entrée des gaz E et à travers la première dérivation Z1 le radiateur 3 et la deuxième dérivation Z2, vers la sortie des gaz A.

2. Valve de recyclage des gaz d'échappement selon la revendication 1, dans laquelle, d'une part, l'entrée des gaz E et la sortie des gaz A et, d'autre part, la première dérivation Z1 et la deuxième dérivation Z2 sont disposées chacune perpendiculairement l'une par rapport à l'autre, les axes longitudinaux de l'entrée des gaz E, de la sortie des gaz A, de la première dérivation Z1 et de la deuxième dérivation Z2 ayant un point d'intersection commun.

3. Valve de recyclage des gaz d'échappement selon la revendication 1 ou la revendication 2, dans laquelle, en tant que radiateur (3), est placé un radiateur à eau.
